# EUROPÄISCHE PATENTSCHRIFT

(11) **EP 2 823 162 B1**
(45) Veröffentlichungstag und Bekanntmachung des Hinweises auf die Patenterteilung: **12.10.2016**
(21) Anmeldenummer: 13703579.6
(22) Anmeldetag: 08.02.2013
(51) Int. Cl.: F01N 3/08, F01N 3/28

(54) **ABGASNACHBEHANDLUNGSKOMPONENTE MIT HC-ADSORBERFUNKTION SOWIE ABGASANLAGE MIT EINER SOLCHEN**
EXHAUST GAS AFTER-TREATMENT COMPONENT HAVING HC ADSORBER FUNCTION AND EXHAUST GAS SYSTEM COMPRISING SAME
COMPOSANT DE POST-TRAITEMENT DES GAZ D'ÉCHAPPEMENT PRÉSENTANT UNE FONCTION D'ADSORPTION DES HYDROCARBURES ET SYSTÈME D'ÉCHAPPEMENT POURVU D'UN TEL COMPOSANT

(30) Priorität: 10.03.2012 DE 102012004924
(43) Veröffentlichungstag der Anmeldung: 14.01.2015
(73) Patentinhaber: Volkswagen Aktiengesellschaft, 38436 Wolfsburg (DE)
(72) Erfinder: SEILER, Valeri, 29399 Wahrenholz (DE)
(86) Internationale Anmeldenummer: PCT/EP2013/052546
(87) Internationale Veröffentlichungsnummer: WO 2013/135441

(56) Entgegenhaltungen:
- EP-A1- 0 697 505
- WO-A1-95/18292

## Beschreibung

Die Erfindung betrifft eine Abgasnachbehandlungskomponente mit einer HC-Adsorberfunktion, eine diese Abgasreinigungsanlage aufweisende Abgasanlage sowie ein Fahrzeug, welches eine solche Abgasanlage aufweist.

Der Einsatz von Katalysatoren in den Abgasanlagen von Verbrennungsmotoren ist heute selbstverständlich. Beispielsweise werden insbesondere bei Dieselmotoren Oxidationskatalysatoren eingesetzt, welche unverbrannte Kohlenwasserstoffe (HC) sowie Kohlenmonoxid (CO) konvertieren, und bei Diesel- und Ottomotoren Reduktionskatalysatoren, die Stickoxide (NO_{X}) umsetzen. Darüber hinaus sind Drei-Wege-Katalysatoren bekannt, welche die Funktion von Oxidations- und Reduktionskatalysatoren vereinen und somit alle drei Komponenten katalytisch umsetzen und hauptsächlich bei Ottomotoren eingesetzt werden. Grundsätzlich benötigen sämtliche Katalysatoren eine spezifische Mindesttemperatur, um eine ausreichende Konvertierungsleistung zu erbringen. Als Maßstab hierfür wird die so genannte Light-off- oder Anspringtemperatur herangezogen, bei welcher der Katalysator 50 % der limitierten Abgaskomponenten konvertiert. Nach einem Kaltstart des Motors ist diese Temperatur üblicherweise noch nicht erreicht, so dass, wenn keine weiteren Maßnahmen ergriffen werden, die als Startemissionen bezeichneten Emissionen unkonvertiert die Abgasanlage verlassen.

Der Wunsch nach einer weiteren Reduzierung von Emissionen sowie die zunehmend niedriger werdenden Abgasgrenzwerte erfordern auch die Reduzierung der Startemissionen und somit das frühere Erreichen der Betriebstemperaturen des Katalysatorsystems. Heutige und erst recht zukünftige Abgasgesetzgebungen erfordern daher, dass auch die Startemissionen zur Bestimmung der Gesamtemissionen eines Fahrzeugs in standardisierten Fahrzyklen gemessen werden.

Eine verbreitete Maßnahme zur Reduzierung der Startemissionen ist die motornahe Anordnung relativ kleinvolumiger Vorkatalysatoren, die auch als Startkatalysatoren bezeichnet werden. Aufgrund ihres geringen Volumens und ihrer motornahen Platzierung erreichen Vorkatalysatoren relativ schnell ihre Light-off-Temperatur und übernehmen dann die Konvertierung eines Großteils der Emissionen, bis auch ein nachgeschalteter Hauptkatalysator seine Betriebstemperatur erreicht hat.

Aus DE 102 01 042 A1 ist ein Abgaskatalysator mit einem monolithischen Keramikträgerkörper bekannt, der einen Innenbereich und einen Außenbereich aufweist, wobei der Innenbereich eine höhere Zelldichte als der Außenbereich aufweist. Die den Trägerkörper axial durchlaufenden Strömungskanäle des Innen- und Außenbereichs weisen eine katalytische Beschichtung (Washcoat) auf. Durch die höhere Zelldichte des Innenbereichs besitzt dieser eine höhere Katalysatoraktivität als der Außenbereich. Stromauf des Katalysatorträgers ist ein Drallerzeuger angeordnet, der bei niedrigen Strömungsgeschwindigkeiten des Abgases, also bei niedrigen Motorlastbereichen, den Abgasstrom im Wesentlichen in den Innenbereich lenkt und bei höheren Strömungsgeschwindigkeiten, also höheren Lasten, in den Außenbereich. Durch diese Anordnung wird nach einem Kaltstart erreicht, dass zunächst der Abgasstrom im Innenbereich katalytisch behandelt wird, wobei durch die exotherme Wärmefreisetzung der Innenbereich relativ schnell erwärmt wird und somit auch den umgebenden Außenbereich aufheizt.

US 2002/0132726 A1 beschreibt eine Abgasanlage, die einen Hauptkatalysator aufweist sowie stromab von diesem zwei parallele Abgasleitungen, die mittels eines Umklappventils wahlweise verschlossen bzw. geöffnet werden können. Die zwei parallelen Abgasleitungen haben eine konzentrische Anordnung mit einer innen liegenden Hauptleitung und einer diese konzentrisch umschließende Nebenleitung, in welcher ein ringförmiger HC-Adsorber angeordnet ist. Aus der Nebenleitung stromauf des HC-Adsorbers zweigt eine Rückführungsleitung ab, welche unverbrannte und aus dem Adsorber desorbierte Kohlenwasserstoffe dem Verbrennungsmotor zuführt. Nach einem Kaltstart wird die innen liegende Hauptleitung verschlossen und der Abgasstrom über den HC-Adsorber geleitet, der die unverbrannten und von dem noch nicht betriebsbereiten Hauptkatalysator nicht umgesetzten Kohlenwasserstoffe HC absorbiert und/oder chemisorbiert. Sobald der Hauptkatalysator seine Betriebstemperatur erreicht hat und somit eine ausreichende HC-Konvertierung sicherstellt, wird der Abgasstrom in die Hauptleitung gelenkt. Aufgrund der nun stattfindenden Erwärmung desorbieren die Kohlenwasserstoffe vom HC-Adsorber und werden über die Rückführungsleitung der motorischen Verbrennung zugeführt.

Es ist ferner ein ähnliches Konzept bekannt, das ebenfalls die konzentrische Struktur aus außen liegendem HC-Adsorber und innen liegender Hauptleitung verwendet, wobei in diesem Konzept der Hauptkatalysator jedoch nicht vorgeschaltet, sondern dem HC-Adsorber nachgeschaltet ist. In diesem Aufbau entfällt die in US 2002/0132726 A1 beschriebene Rückführungsleitung. Vielmehr werden die desorbierten Kohlenwasserstoffe von dem nachgeschalteten Hauptkatalysator umgesetzt.

Im Dokument EP 0 697 505 A1 wird eine Abgasnachbehandlungskomponente beschrieben, bei dem der zentrale Bereich entweder vollständig zellfrei ist, oder aber die Zellen des zentralen Bereichs größer sind als die Zellen des äußeren Bereichs. Auf diese Weise soll eine hohe Strömungsrate in dem zentralen Bereich und damit ein schnelles Aufheizen des nachgeschalteten Katalysators erzielt werden, ehe der HC-Absorber seine Desorptionstemperatur erreicht.

Das Dokument WO 95/18292 A1 offenbart eine Abgasnachbehandlungskomponente mit einem ringförmigen Medium mit Filter- und/oder Adsorberfunktion. Der zentrale Bereich ist vollständig zellfrei. Stromauf und stromab des Adsorbers ist jeweils ein HC-Konverter installiert. Innerhalb des zellfreien Bypasses des Adsorbers ist ein Stellmittel in Form einer Drosselklappe angeordnet.

Wünschenswert bei den vorstehend diskutierten HC-Adsorberkonzepten wäre, diese mit einer zusätzlichen Partikelfilterfunktion auszustatten. Filterfunktionen lassen sich jedoch nur durch den Einsatz keramischer Trägerkörper (Monolithe) erzielen. Werden solche Monolithe jedoch mit einer zentralen Bohrung versehen, um die den HC-Adsorber umgehende Bypassfunktion zu realisieren, verringert sich jedoch die mechanische Stabilität des Trägerkörpers und somit seine Lebensdauer. Aus diesem Grund und auch wegen der Schwierigkeit der Herstellung ringförmiger keramischer Trägerkörper werden in den bekannten Konzepten Metallträgerkörper eingesetzt. Ebenso wie Keramikmonolithe weisen auch Metallträgerkörper eine Vielzahl längs verlaufender Strömungskanäle auf, wobei diese jedoch durch die Kombination eines gewellten Blechs und eines ebenen Blechs und deren spiralartiges Aufwickeln hergestellt werden. Eine Partikelfilterfunktion, die auf zum Teil geschlossenen Strömungskanälen basiert, ist mit Metallträgerkörpern nicht möglich.

Der Erfindung liegt die Aufgabe zugrunde, einen ringförmigen, somit eine zentrale Bypassfunktion aufweisenden HC-Adsorber unter Verwendung eines keramischen Trägerkörpers bereitzustellen, ohne eine Beeinträchtigung seiner Stabilität in Kauf zu nehmen. Diese Aufgabe wird durch eine Abgasnachbehandlungskomponente, eine Abgasanlage, die eine solche Abgasnachbehandlungskomponente umfasst, sowie ein entsprechendes Fahrzeug mit den Merkmalen der unabhängigen Ansprüche gelöst.

Die erfindungsgemäße Abgasnachbehandlungskomponente umfasst einen keramischen Trägerkörper (Monolith) mit einer Vielzahl axialer (das heißt längs der Abgasströmungsrichtung verlaufender) Strömungskanäle. Dabei weist der Trägerkörper einen Innenbereich und einen, den Innenbereich umschließenden Außenbereich auf, wobei eine Zelldichte des Trägerkörpers im Innenbereich kleiner als eine Zelldichte im Außenbereich ist. Zumindest der Außenbereich des Trägerkörpers, das heißt seine Strömungskanäle, weist eine Beschichtung auf, wobei die Beschichtung des Außenbereichs eine HC-Adsorberfunktion zur reversiblen Adsorption unverbrannter Kohlenwasserstoffe aufweist.

Unter "Zelldichte" oder auch "Zellzahl" wird gemeinhin und auch in der vorliegenden Beschreibung die Anzahl der Strömungskanäle bezogen auf den Querschnitt oder die Stirnflächen des Trägerkörpers verstanden. Die international übliche Einheit für die Zelldichte ist cpsi (für cells per square inch, also Zellen pro Quadratzoll). Ferner meint der Begriff "ein den Innenbereich umschließender Außenbereich", dass der Außenbereich den Innenbereich entlang seiner radialen Umfangsfläche umgibt, unabhängig von einer geometrischen Querschnittsgestaltung.

Durch die im Innenbereich vorhandenen Strömungskanäle wird eine mechanische Stützfunktion des Trägerkörpers insgesamt erzielt. Das im Stand der Technik bekannte Problem der Stabilitätsverminderung in Folge einer zentralen Bypassbohrung im Trägerkörper wird somit vermieden. Gleichzeitig führt die gegenüber dem Außenbereich verminderte Zelldichte im Innenbereich zu einem geringen Abgasgegendruck im Innenbereich, was für die Adsorberfunktion im Außenbereich vorteilhaft ist. Schließlich eröffnet das Vorhandensein von Strömungskanälen bzw. Zellwänden im Innenbereich die Möglichkeit, diese bei Bedarf mit einer Funktionalität auszustatten, beispielsweise mit einer katalytischen Funktion.

Vorzugsweise ist der keramische Trägerkörper einstückig ausgebildet. Dabei wird mit dem Begriff "einstückig" ein Körper verstanden, der aus einer durchgehenden Materialart entweder in materialaufbauender Fertigungsweise oder aus einem Werkstück durch Materialabtragung hergestellt ist. Der einstückige Trägerkörper ist somit nicht aus mehreren Teilkörpern zusammengesetzt. Die Herstellung monolithischer Trägerkörper mit unterschiedlichen Zelldichtebereichen ist technisch möglich (siehe DE 102 010 42 A1). Die einstückige Ausbildung des Trägerkörpers führt nicht nur zu einer Vereinfachung seiner Herstellung, sondern auch zu einer erhöhten Stabilität, da Spannungen zwischen ansonsten zusammengesetzten Teilkörpern vermieden werden.

Erfindungsgemäß weist der Außenbereich zusätzlich zu seiner HC-Adsorberfunktion eine Partikelfilterfunktion auf. Diese wird durch wechselseitig verschlossene Strömungskanäle erzielt, wodurch das Abgas gezwungen wird, lateral die die Strömungskanäle umschließenden Kanalwände zu durchdringen. Bei der Durchdringung der porösen Filterwand werden im Abgas enthaltene Rußpartikeln zurückgehalten. Das auf wechselseitig verschlossenen Strömungskanälen basierende Filterprinzip wird auch als Wandstromfilter oder geschlossenes System bezeichnet. Im Gegensatz dazu basiert der Filtereffekt so genannter Nebenstromfilter auf die Durchleitung des Abgases durch Fliese oder dergleichen, die nicht in den Strömungskanälen selbst, sondern in den Nachbarkanälen angeordnet sind.

Nach einer Ausgestaltung der Erfindung weist der Innenbereich des keramischen Trägerkörpers keine Beschichtung (Washcoat) auf und damit auch keine katalytische oder andere Funktion. In dieser Ausgestaltung beschränkt sich die Funktion des Innenbereichs auf die Bypassfunktion und die Stabilisierung des Substrats.

In einer alternativen Ausführung der Erfindung weist der Innenbereich eine Beschichtung, insbesondere in Form eines Washcoats auf, welche mit einer katalytischen Funktion versehen ist. Vorzugsweise handelt es sich hierbei um eine drei-Wege-katalytische Funktion, welche eine katalytische Konvertierung sowohl von Kohlenwasserstoffen (HC), Kohlenmonoxid (CO) als auch von Stickoxiden (NOₓ) unterstützt. Zu diesem Zweck kann die katalytische Beschichtung die Edelmetalle Platin, Palladium und/oder Rhodium enthalten, insbesondere eine Kombination aus Platin und Rhodium oder Palladium und Rhodium. Das Vorhandensein einer katalytischen Funktion im Innenbereich der Abgasnachbehandlungskomponente ermöglicht, das Katalysatorvolumen eines eventuell vorhandenen Hauptkatalysators und/oder eines vorgeschalteten Vorkatalysators entsprechend zu reduzieren. Auf diese Weise wird eine verbesserte Ausnutzung des Bauraums erzielt.

Vorzugsweise entspricht die Zelldichte des Außenbereichs einem ganzzahligen Vielfachen des Innenbereichs, da ein solcher Trägerkörper fertigungstechnisch durch Vereinen von Zellen und somit durch geringe Modifizierung der im Herstellungsprozess des Monolithen eingesetzten Werkzeuge einfach realisierbar ist. Mit Vorteil kann ein Verhältnis der Zelldichte des Außenbereichs zu der Zelldichte des Innenbereichs somit 2, 4, 6, 8, 9 oder 12 betragen, insbesondere 2, 4 oder 6. Dabei ist die untere Grenze durch die mit erhöhter Zelldichte des Innenbereichs einhergehende Erhöhung des Abgasgegendrucks limitiert. Die Obergrenze des Verhältnisses der Zelldichten des Außen- und Innenbereichs wird durch die sich mit vermindernder Zelldichte ergebende verringerte Stabilisierungsfunktion des Innenbereichs begrenzt. Ein besonders bevorzugter Kompromiss zwischen Abgasgegendruck und Stabilisierungswirkung stellt ein Verhältnis der Zelldichte von Außenbereich zu Innenbereich von etwa 4:1 dar.

Ein im Sinne einer ausreichenden Stabilisierung einerseits und eines geringen Abgasgegendrucks andererseits bevorzugter Bereich der Zelldichte des Innenbereichs beträgt 100 bis 225 cpsi (cells per square inch), besonders bevorzugt 150 bis 200 cpsi.

Die Abgasnachbehandlungskomponente verfügt nach einer bevorzugten Ausgestaltung der Erfindung über Stellmittel, die eine selektive Leitung des Abgasstroms in den Innenbereich und/oder in den Außenbereich ermöglichen. Vorzugsweise sind die Stellmittel derart ausgebildet, dass auch Zwischenstellungen möglich sind, so dass ein vorbestimmbarer Teil des Abgasstroms in den Innenbereich und der übrige Teil in den Außenbereich geleitet wird.

In einer besonderen Ausführung der Erfindung ist vorgesehen, dass das Stellmittel lediglich eingangsseitig der Hauptleitung vorgesehen ist und in seiner geschlossenen Stellung die Hauptleitung verschließt und in einer geöffneten Stellung die Hauptleitung öffnet. Die fertigungstechnische Realisierung einer solchen Ausgestaltung ist besonders einfach und lässt sich besonders günstig in Kombination mit der konzentrischen Ausführung der parallelen Abgasleitungen realisieren.

Ein weiterer Aspekt der vorliegenden Erfindung betrifft eine Abgasanlage für einen Verbrennungsmotor, insbesondere einen Ottomotor, welcher eine Abgasnachbehandlungskomponente gemäß der vorliegenden Erfindung umfasst.

Gemäß einer vorteilhaften Ausgestaltung der Erfindung umfasst die Abgasanlage ferner einen der erfindungsgemäßen Abgasnachbehandlungskomponente nachgeschalteten Hauptkatalysator, der vorzugsweise als ein Drei-Wege-Katalysator ausgestaltet ist. Gemäß einer bevorzugten Weiterbildung ist die erfindungsgemäße Abgasnachbehandlungskomponente mit HC-Adsorberfunktion zusammen mit dem nachgeschalteten Hauptkatalysator in einem gemeinsamen Katalysatorgehäuse angeordnet. Auf diese Weise wird vorhandener Bauraum optimal genutzt und die Fertigung der Abgasanlage vereinfacht.

Nach einer weiteren Ausgestaltung umfasst die Abgasanlage ferner einen der Abgasnachbehandlungskomponente in Abgasströmungsrichtung vorgeschalteten Vorkatalysator, der vorzugsweise ebenfalls als Drei-Wege-Katalysator ausgebildet ist. Der Vorkatalysator weist ein vergleichsweise geringeres Katalysatorvolumen auf und ist in einer möglichst motornahen Position angeordnet, so dass sich dieser nach einem Motorkaltstart schnell aufheizt.

Insbesondere bei gleicher Art der Katalysatoren kann mit Vorteil vorgesehen sein, dass eine Summe der Konvertierungskapazitäten des Hauptkatalysators und der katalytischen Beschichtung des Innenbereichs sowie eines gegebenenfalls vorhandenen Vorkatalysators so eingerichtet ist, dass diese Gesamtkonvertierungskapazität eine vorbestimmte Gesamtkonvertierungsleistung erfüllt, insbesondere in einem definierten, standardisierten Fahrzyklus, vorzugsweise im gesamten, also sämtliche Betriebspunkte abdeckenden Motorkennfeld. Mit anderen Worten verteilt sich die Gesamtkonvertierungsleistung auf die vorhandenen Katalysatoren (Hauptkatalysator, Innenbereichskatalysator und/oder Vorkatalysator). Dies hat den Vorteil, dass das Volumen und/oder die Edelmetallbeladung z.B. des Hauptkatalysators gegenüber dem Stand der Technik, in dem kein Innenbereichkatalysator vorgesehen ist, kleiner gewählt werden kann. Durch das kleinere Volumen kann der zur Verfügung stehende Bauraum besser und flexibler genutzt werden.

Ein weiterer Aspekt der vorliegenden Erfindung betrifft ein Fahrzeug mit einem Verbrennungsmotor, insbesondere mit einem Ottomotor, und einer diesem angeschlossenen Abgasanlage, welche die erfindungsgemäße Abgasnachbehandlungskomponente umfasst.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch eine Abgasanlage gemäß der vorliegenden Erfindung;
- Figur 2: eine Längsschnittansicht einer erfindungsgemäßen Abgasnachbehandlungskomponente der Abgasanlage nach Figur 1 nach einer ersten Ausgestaltung der Erfindung,
- Figur 3: eine Längsschnittansicht einer erfindungsgemäßen Abgasnachbehandlungskomponente der Abgasanlage nach Figur 1 nach einer zweiten Ausgestaltung der Erfindung und
- Figur 4: einer Querschnittsansicht einer Abgasnachbehandlungskomponente nach Figur 2 oder 3.

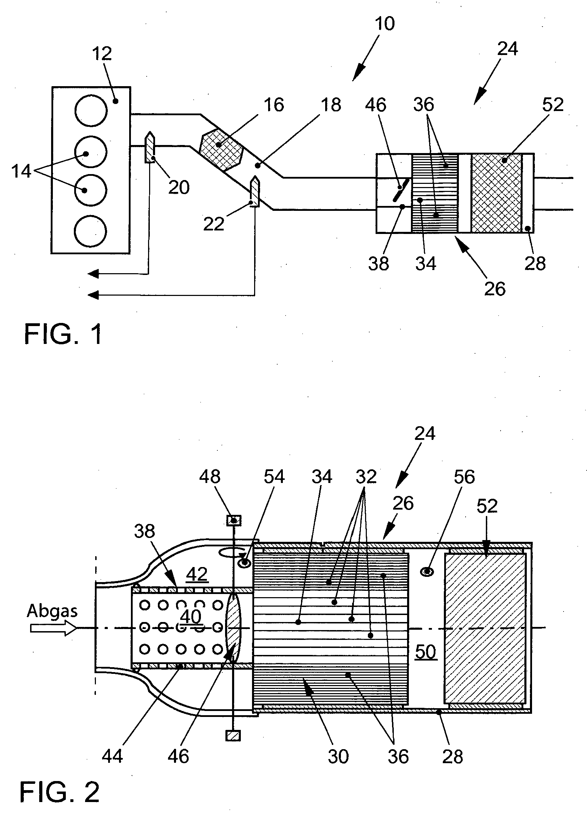

Figur 1 zeigt eine Überblicksansicht einer erfindungsgemäßen Abgasanlage 10 eines ansonsten nicht dargestellten Fahrzeugs.

Das Abgas eines Verbrennungsmotors 12, beispielsweise eines Ottomotors, tritt über Abgasauslasse seiner Zylinder 14 zunächst in einen nicht dargestellten Abgaskrümmer ein. An einer motornahen Position, insbesondere unmittelbar an den Abgaskrümmer anschließend, kann ein kleinvolumiger Vorkatalysator 16 angeordnet sein, der die Funktion eines Startkatalysators erfüllt, indem er nach einem Kaltstart des Verbrennungsmotors sich sehr schnell erwärmt und die Hauptkonvertierungsleistung nach seinem Light-off nach Motorstart bis zu einem Anspringen eines nachgeschalteten Konverters übernimmt. Je nach Art des Verbrennungsmotors kann der Vorkatalysator ein Oxidations- oder ein Drei-Wege-Katalysator sein. Der Vorkatalysator 16 ist beispielsweise über eine Flanschverbindung mit einem Abgasrohr 18 verbunden.

An einer motornahen Position stromauf des Vorkatalysators 16 ist eine erste Lambdasonde 20 angeordnet, die einen Sauerstoffgehalt des Rohabgases des Motors misst und in bekannter Weise der Regelung des Luft-Kraftstoff-Gemischs des Motors dient. Ferner kann stromab des Vorkatalysators 16 eine zweite Lambdasonde 22 vorgesehen sein. Die zweite Lambdasonde 22 kann verschiedene Funktionen erfüllen. Beispielsweise kann sie der Diagnose des Vorkatalysators 16 dienen, dem Abgleich der Sonden untereinander und/oder der Gemischregelung.

In das Abgasrohr 18 ist ferner eine Katalysatoreinheit 24 installiert, die eine erfindungsgemäße Abgasnachbehandlungskomponente 26 umfasst und nachfolgend anhand der Figuren 2 bis 4 näher erläutert wird.

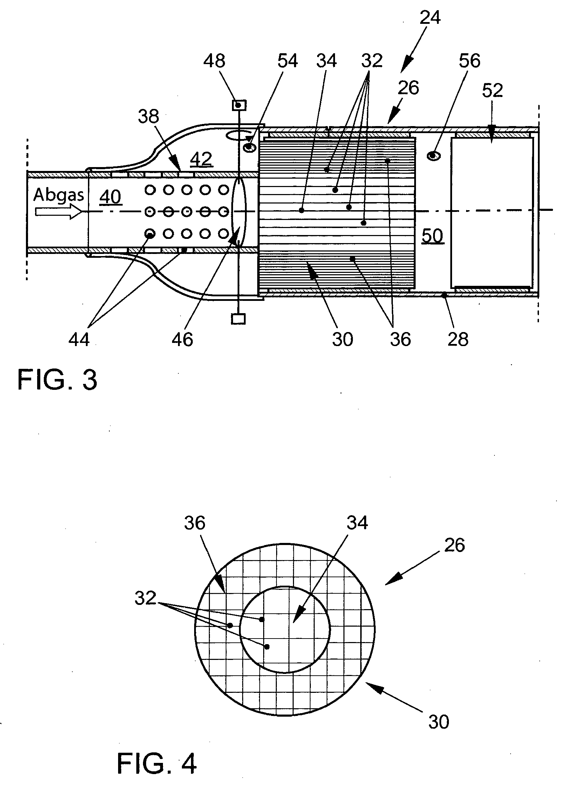

Wie in den Figuren 2 und 3 erkennbar, weist die Katalysatoreinheit 24 im vorliegenden Beispiel ein gemeinsames Katalysatorgehäuse 28 auf, in dem die Abgasnachbehandlungskomponente 26 stoßdämpfend, beispielsweise in einer so genannten Blähmatte, gelagert ist.

Die Abgasnachbehandlungskomponente 26 weist einen Trägerkörper 30 auf, der einstückig aus einem keramischen Material gefertigt ist und in Längsrichtung (siehe Abgaspfeil) eine Vielzahl von Strömungskanälen 32 aufweist, welche zwischen dünnen keramischen Wänden gebildet sind. Es kommen die bekannten, für Abgaskomponenten üblichen keramischen Materialien in Frage. Der Trägerkörper 30 weist einen Innenbereich 34 sowie einen den Innenbereich 34 entlang seines radialen Umfangs umschließenden Außenbereich 36 auf. Innen- und Außenbereich unterscheiden sich in ihrer Zelldichte, wobei die des Außenbereichs 36 größer als die des Innenbereichs 34 ist, vorzugsweise um einen Faktor 4. Bevorzugt liegt die (geringere) Zelldichte des Innenbereichs in einer Spanne von 100 bis 225 cpsi, so dass sich in diesem Fall eine Zelldichte für den Außenbereich von 400 bis 900 cpsi ergibt.

Wie sich insbesondere aus der Querschnittsansicht der Abgasnachbehandlungskomponente 26 in Figur 4 ergibt, können Innenbereich 34 und Außenbereich 36 eine im Wesentlichen runde beziehungsweise ringförmige Querschnittsgestalt aufweisen, wobei jedoch auch andere Formen, beispielsweise elliptische möglich sind. Tatsächlich wird sich herstellungsbedingt häufig eine nicht glatt, sondern stufenförmig verlaufende Grenzfläche zwischen Innen- und Außenbereich ergeben, welche den Abmessungen der Strömungskanäle 32 folgt. Außerdem kann der Innenbereich 34 zentral (koaxial) oder dezentral zum Außenbereich 36 angeordnet sein.

Zumindest die Strömungskanäle 32, das heißt deren Zellwände, des Außenbereichs 36 weisen eine Beschichtung mit HC-Adsorberfunktion auf. Dabei handelt es sich typischerweise um eine Zeolith-Beschichtung, welche unverbrannte Kohlenwasserstoffe HC adsorptiv und/oder chemisorptiv zu binden vermag und bei erhöhten Temperaturen wieder desorbiert. Derartige Beschichtungen werden in bekannter Weise als Suspension (Washcoat) feiner Keramikpartikel, z.B. Aluminiumoxid, aufgebracht. Geeignete HC-Adsorber sind dem Fachmann bekannt und bedürfen keiner näheren Erläuterung.

Zusätzlich ist - entsprechend einer besonders bevorzugten Ausgestaltung - der Außenbereich 36 mit einer Partikelfilterfunktion ausgestattet. Diese Filterfunktion wird vorzugsweise durch wechselweise in Strömungsrichtung verschlossene Strömungskanäle 32 erhalten. Dabei meint wechselweise, dass ein Teil der Strömungskanäle 32 einlassseitig verschlossen sind und der andere Teil, nämlich die zu den einlassseitig verschlossenen Strömungskanälen 32 benachbarten Kanäle 32, auslassseitig verschlossen sind. Auf diese Weise ist das in einen auslassseitig verschlossenen Strömungskanal eintretende Abgas gezwungen, die Zellwände zu durchtreten, um in einen benachbarten einlassseitig verschlossenen Strömungskanal zu gelangen 32. Beim Durchdringen der Zellwand werden Partikel zurückgehalten. Der Aufbau von diesen Wandfiltern ist grundsätzlich bekannt.

Auch der Innenbereich 34 weist eine Beschichtung, etwa eine Zeolith-Beschichtung, auf, die zudem mit einer Abgasnachbehandlungsfunktionalität ausgestattet ist, insbesondere mit einer katalytischen Funktion, im vorliegenden Bespiel mit der Funktion eines Drei-Wege-Katalysators. Zu diesem Zweck haften in und/oder auf der Zeolith-Beschichtung entsprechend katalytisch wirkende Edelmetallpartikel in feinster Verteilung an.

Grundsätzlich kann der Innenbereich 34 jedoch auch ohne eine Beschichtung ausgebildet sein, so dass er selbst keine Abgasnachbehandlungsfunktionalität aufweist. In diesem Fall dient der Innenbereich 34 einzig der Ermöglichung einer Bypassleitung zur Umgehung des HC-Adsorbers des Außenbereichs 36 sowie der Stabilisierung des Trägerkörpers 30 insgesamt.

Wie in Figur 2 erkennbar, ist in einem eingangsseitigen Abschnitt des Katalysatorgehäuses 28 ein konzentrisches Innenrohr 38 angeordnet, so dass sich der Abgasweg in diesem Abschnitt in zwei parallele Abgasleitungen aufspaltet, nämlich eine innen liegende Hauptleitung 40 sowie eine ringförmige, die Hauptleitung 40 umhüllende Nebenleitung 42. Das Innenrohr 38 schließt mit seinem stromabwärtigen Ende an den Trägerkörper 30 der erfindungsgemäßen Abgasnachbehandlungskomponente 26 an, insbesondere so, dass die Hauptleitung 40 an den Innenbereich 34 anschließt und die Nebenleitung in den Außenbereich 36. Das Innenrohr 38 weist eine Vielzahl von Durchtrittsöffnungen 44 auf, die ein Durchströmen durch das Abgas ermöglichen.

Die Katalysatoreinheit 24 weist ferner ein Stellmittel 46 zur selektiven Umleitung des Abgasstroms in die Hauptleitung 40 und/oder in die Nebenleitung 42 auf. Das Stellmittel 46 ist im vorliegenden Beispiel als eine an einer Achse drehbar gelagerte Klappe ausgestaltet, welche in dem Innenrohr 38 angeordnet ist und zwischen einer geöffneten Stellung und einer geschlossenen Stellung durch einen geeigneten Aktuator 48 bewegt werden kann. In der geschlossenen Stellung verschließt die Klappe den Zugang in den Innenbereich 34 der Abgasnachbehandlungskomponente 26, so dass der Abgasstrom durch die Öffnungen 44 des Innenrohrs 38 in die Nebenleitung 42 strömt und somit in den Außenbereich 36 und über den HC-Adsorber geführt wird. In der geöffneten Stellung hingegen sind sowohl die Hauptleitung 40 als auch die Nebenleitung 42 geöffnet. Durch den geringeren Strömungswiderstand im Innenbereich 34 der Komponente 26 strömt der Abgasstrom zumindest hauptanteilig durch den Innenbereich 34 und den dort vorhandenen Abgaskatalysator. Vorzugsweise ist das Stellmittel 46 zudem in Zwischenstellungen schaltbar, so dass der Abgasstrom anteilig in die Hauptleitung 40 und in die Nebenleitung 42 geleitet werden kann. Selbstverständlich können die Mittel zur selektiven Leitung des Abgases in die Bereiche 34 und 36 der Komponente 26 auch anders als hier beispielhaft dargestellt ausgestaltet sein.

Stromab der Abgasnachbehandlungskomponente 26 strömt das Abgas in eine gemeinsame Abgasleitung 50, wo ein Hauptkatalysator 52 angeordnet ist, der insbesondere eine drei-Wege-katalytische Beschichtung aufweist und somit der Konvertierung von unverbrannten Kohlenwasserstoffen HC, Kohlenmonoxid CO sowie Stickoxiden NO_{X} dient.

Zur Steuerung des Stellmittels 46 und damit zur Leitung des Abgasstroms über den HC-Adsorber des Außenbereich 36 und/oder über den Abgaskatalysator des Innenbereichs 34 können an den in Figur 2 mit 54 und 56 bezeichneten Positionen, also stromauf und stromab der Abgasnachbehandlungskomponente 26, Temperatursensoren 54, 56 angeordnet sein. Die Sensoren 54, 56 messen die Abgastemperatur und lassen somit Rückschlüsse auf die Temperaturen des HC-Adsorbers im Außenbereich 36 beziehungsweise des Hauptkatalysators 52 zu. Denkbar ist auch, die Temperatursensoren direkt in den entsprechenden Komponenten zu installieren.

Die in Figur 3 gezeigte Ausführungsform der Katalysatoreinheit 24 unterscheidet sich von der nach Figur 2 lediglich in einer längeren Ausführung des Innenrohres 38, welches hier den Eingangsstutzen des Gehäuses 28 axial überragt. Das Innenrohr 38 kann beispielsweise durch eine Schweißnaht mit dem vorderen Rand des Eingangsstutzens verbunden sein. Die hier dargestellte Ausführungsform hat gegenüber der nach Figur 2 im Wesentlichen fertigungstechnische Vorteile.

Die in den Figuren 1 bis 3 dargestellte Abgasanlage 10 zeigt folgende Funktion.

Nach einem Kaltstart des Verbrennungsmotors 12, wenn die Katalysatoren 16 und 52 und gegebenenfalls der im Innenbereich 34 der Komponente 26 vorhandene Katalysator ihre Betriebstemperatur noch nicht aufweisen, ist das Stellmittel 46 vor dem Innenbereich 34 der Komponente 26 zunächst geschlossen, so dass der gesamte Abgasstrom durch den HC-Adsorber des Außenbereichs 36 strömt. Dieser speichert die im Abgas enthaltenen Kohlenwasserstoffe, die in den ersten Sekunden nach Motorstart den nicht betriebsbereiten Vorkatalysator 16 unkonvertiert passieren, ein. Die Größe des Adsorbers ist so ausgelegt, dass die Kohlenwasserstoffe so lange vollständig gespeichert werden können, bis der Vorkatalysator 16 seine Light-off-Temperatur erreicht hat und ihre Konvertierung übernimmt.

Hat der Vorkatalysator 16 diese Temperatur erreicht, was durch eine Modellierung oder mittels des Temperatursensors 54 erkannt werden kann, wird das Stellmittel 46 geöffnet, so dass das heiße Abgas über den im Innenbereich 34 der Abgasnachbehandlungskomponente 26 vorhandenen Abgaskatalysator strömt und diesen erwärmt. Sobald der Abgaskatalysator des Innenbereichs 34 seine Light-off-Temperatur erreicht, beschleunigt sich aufgrund der Exothermie der Konvertierungsreaktionen seine weitere Erwärmung. Außerdem strömt das so bereits erwärmte Abgas in den Hauptkatalysator 52 und führt zu dessen Aufheizung.

Wird mittels des Temperatursensors 56 erkannt, dass auch der Hauptkatalysator 52 seine Anspringtemperatur erreicht hat, wird das Stellmittel 46 wieder teilweise oder vollständig geschlossen, so dass der gesamte beziehungsweise ein bestimmter Anteil des Abgasstroms über den HC-Adsorber geführt wird und diesen erwärmt. Sobald der HC-Adsorber seine Desorptionstemperatur erreicht hat, werden die gespeicherten Kohlenwasserstoffe freigesetzt und strömen in die gemeinsame Abgasleitung 50 und in den Hauptkatalysator 452, wo sie zu CO₂ und H₂O umgesetzt werden.

Insgesamt wird durch die Anordnung des Abgaskatalysators im Innenbereich 34 die Erwärmung des nachgeschalteten Hauptkatalysators 52 und sein Anspringen nach einem Kaltstart deutlich beschleunigt.

Die Volumina und/oder die Edelmetallbeladungen des Abgaskatalysators des Innenbereichs 34 und des Hauptkatalysators 52 und - sofern vorgesehen - des Vorkatalysators 16 sind so ausgelegt, dass die Summe ihrer Konvertierungsleistungen im gesamten Betriebskennfeld des Motors eine vorbestimmte, ausreichende und hohe Gesamtkonvertierungsleistung erfüllt. Dies bedeutet, dass auch in entsprechenden Hochgeschwindigkeitsphasen des Fahrzyklus die limitierten Abgaskomponenten zumindest entsprechend den Vorgaben konvertiert werden müssen. Außerdem muss der Hauptkatalysator 52 in der Desorptionsphase des HC-Adsorbers in der Lage sein, die desorbierten Kohlenwasserstoffe umzusetzen. Dies gestattet gegenüber einem analogen System, bei dem kein Abgaskatalysator im Innenbereich 34 vorgesehen ist, den Hauptkatalysator 52 kleiner zu dimensionieren, da der Abgaskatalysator im Innenbereich 34 eine zusätzliche Oberfläche mit katalytischer Aktivität bereitstellt. Im Extremfall kann, sofern der Vorkatalysator 16 und der Innenbereichskatalysator 34 zusammen ausreichend Konvertierungsleistung im Fahrzyklus aufbringen, der Hauptkatalysator 52 so bemessen sein, dass er lediglich die in der Desorptionsphase freigesetzten Kohlenwasserstoffe umsetzt. In diesem Fall kann auch eine reine Oxidationsfunktion des Hauptkatalysators 52 ausreichend sein.

### Bezugszeichenliste

- 10: Abgasanlage
- 12: Verbrennungsmotor
- 14: Zylinder
- 16: Vorkatalysator
- 18: Abgasrohr
- 20: erste Lambdasonde
- 22: zweite Lambdasonde
- 24: Katalysatoreinheit
- 26: Abgasnachbehandlungskomponente
- 28: Katalysatorgehäuse
- 30: Trägerkörper
- 32: Strömungskanäle
- 34: Innenbereich
- 36: Außenbereich
- 38: Innenrohr
- 40: Hauptleitung
- 42: Nebenleitung
- 44: Öffnungen
- 46: Stellmittel
- 48: Aktuator
- 50: gemeinsame Abgasleitung
- 52: Hauptkatalysator
- 54: Temperatursensor
- 56: Temperatursensor

## Patentansprüche

1. Abgasnachbehandlungskomponente (26) umfassend einen keramischen Trägerkörper (30) mit einer Vielzahl axialer Strömungskanäle (32), wobei der Trägerkörper (30) einen Innenbereich (34) und einen, den Innenbereich (34) radial umschließenden Außenbereich (36) aufweist und eine Zelldichte des Trägerkörpers (30) im Innenbereich (34) kleiner als eine Zelldichte im Außenbereich (36) ist, und zumindest der Außenbereich (36) des Trägerkörpers (30) eine Beschichtung aufweist und die Beschichtung des Außenbereichs (36) eine HC-Adsorberfunktion zur reversiblen Adsorption unverbrannter Kohlenwasserstoffe (HC) aufweist, **dadurch gekennzeichnet, dass** der Außenbereich (36) als Wandstromfilter ausgebildet ist und dadurch zusätzlich eine Partikelfilterfunktion aufweist.

2. Abgasnachbehandlungskomponente (26) nach Anspruch 1, wobei der Trägerkörper (30) einstückig ist.

3. Abgasnachbehandlungskomponente (26) nach einem der Ansprüche 1 bis 2, wobei der Innenbereich (34) keine Beschichtung aufweist.

4. Abgasnachbehandlungskomponente (26) nach einem der Ansprüche 1 bis 2, wobei der Innenbereich (34) eine Beschichtung mit einer katalytischen Funktion aufweist, insbesondere mit einer drei-Wege-katalytischen Funktion.

5. Abgasnachbehandlungskomponente (26) nach einem der vorhergehenden Ansprüche, wobei ein Verhältnis der Zelldichte des Außenbereichs (36) zu der Zelldichte des Innenbereichs (34) 2, 4, 6, 8, 9 oder 12 beträgt, insbesondere 2, 4 oder 6, vorzugsweise 4.

6. Abgasnachbehandlungskomponente (26) nach einem der vorhergehenden Ansprüche, wobei die Zelldichte des Innenbereichs (34) in einem Bereich von 100 bis 225 cpsi liegt, insbesondere in einem Bereich von 150 bis 200 cpsi liegt.

7. Abgasnachbehandlungskomponente (26) nach einem der vorhergehenden Ansprüche, ferner umfassend Stellmittel (38, 46) zur selektiven Leitung eines Abgasstroms in den Innenbereich (34) und/oder in den Außenbereich (36) der Abgasnachbehandlungskomponente (26).

8. Abgasanlage (10) für einen Verbrennungsmotor, mit einer Abgasnachbehandlungskomponente (26) nach einem der vorhergehenden Ansprüche 1 bis 7.

9. Abgasanlage (10) nach Anspruch 8, ferner umfassend einen der Abgasnachbehandlungskomponente (26) in Abgasströmungsrichtung vorgeschalteten Vorkatalysator (16), insbesondere einen Drei-Wege-Katalysator.

10. Abgasanlage (10) nach Anspruch 8 oder 9, ferner umfassend einen der Abgasnachbehandlungskomponente (26) in Abgasströmungsrichtung nachgeschalteten Hauptkatalysator (52), insbesondere einen Drei-Wege-Katalysator.

11. Fahrzeug mit einem Verbrennungsmotor und einer diesem angeschlossenen Abgasanlage (10) nach einem der Ansprüche 8 bis 10.

## Claims

1. Exhaust-gas aftertreatment component (26) comprising a ceramic substrate body (30) with a multiplicity of axial flow ducts (32), wherein the substrate body (30) has an inner region (34) and has an outer region (36) radially surrounding the inner region (34), and a cell density of the substrate body (30) in the inner region (34) is lower than a cell density in the outer region (36), and at least the outer region (36) of the substrate body (30) has a coating, and the coating of the outer region (36) has an HC adsorber function for the reversible adsorption of unburned hydrocarbons (HC), **characterized in that** the outer region (36) is in the form of a wall-flow filter and thus additionally has a particle filter function.

2. Exhaust-gas aftertreatment component (26) according to Claim 1, wherein the substrate body (30) is formed in one piece.

3. Exhaust-gas aftertreatment component (26) according to either of Claims 1 and 2, wherein the inner region (34) has no coating.

4. Exhaust-gas aftertreatment component (26) according to either of Claims 1 and 2, wherein the inner region (34) has a coating with a catalytic function, in particular with a three-way catalytic function.

5. Exhaust-gas aftertreatment component (26) according to one of the preceding claims, wherein a ratio of the cell density of the outer region (36) to the cell density of the inner region (34) amounts to 2, 4, 6, 8, 9 or 12, in particular 2, 4 or 6, preferably 4.

6. Exhaust-gas aftertreatment component (26) according to one of the preceding claims, wherein the cell density of the inner region (34) lies in a range from 100 to 225 cpsi, in particular in a range from 150 to 200 cpsi.

7. Exhaust-gas aftertreatment component (26) according to one of the preceding claims, furthermore comprising positioning means (38, 46) for selectively conducting an exhaust-gas flow into the inner region (34) and/or into the outer region (36) of the exhaust-gas aftertreatment component (26).

8. Exhaust system (10) for an internal combustion engine, having an exhaust-gas aftertreatment component (26) according to one of the preceding Claims 1 to 7.

9. Exhaust system (10) according to Claim 8, furthermore comprising a precatalytic converter (16), in particular a three-way catalytic converter, positioned upstream of the exhaust-gas aftertreatment component (26) in an exhaust-gas flow direction.

10. Exhaust system (10) according to Claim 8 or 9, furthermore comprising a main catalytic converter (52), in particular a three-way catalytic converter, positioned downstream of the exhaust-gas aftertreatment component (26) in the exhaust-gas flow direction.

11. Vehicle having an internal combustion engine and having an exhaust system (10) according to one of Claims 8 to 10 connected to said internal combustion engine.

## Revendications

1. Composant de post-traitement de gaz d'échappement (26) comprenant un corps de support céramique (30) avec une pluralité de canaux d'écoulement axiaux (32), le corps de support (30) présentant une région intérieure (34) et une région extérieure (36) entourant radialement la région intérieure (34) et une densité de cellules du corps de support (30) dans la région intérieure (34) étant inférieure à une densité de cellules dans la région extérieure (36), et au moins la région extérieure (36) du corps de support (30) présentant un revêtement et le revêtement de la région extérieure (36) présentant une fonction d'adsorption des hydrocarbures pour l'adsorption réversible des hydrocarbures (HC) non brûlés, **caractérisé en ce que** la région extérieure (36) est réalisée sous forme de filtre de courant de paroi et présente de ce fait en outre une fonction de filtre à particules.

2. Composant de post-traitement de gaz d'échappement (26) selon la revendication 1, dans lequel le corps de support (30) est réalisé d'une seule pièce.

3. Composant de post-traitement de gaz d'échappement (26) selon l'une quelconque des revendications 1 à 2, dans lequel la région intérieure (34) ne présente aucun revêtement.

4. Composant de post-traitement de gaz d'échappement (26) selon l'une quelconque des revendications 1 et 2, dans lequel la région intérieure (34) présente un revêtement ayant une fonction catalytique, en particulier une fonction catalytique à trois voies.

5. Composant de post-traitement de gaz d'échappement (26) selon l'une quelconque des revendications précédentes, dans lequel un rapport de la densité de cellules de la région extérieure (36) à la densité de cellules de la région intérieure (34) est de 2, 4, 6, 8, 9 ou 12, en particulier de 2, 4 ou 6, de préférence de 4.

6. Composant de post-traitement de gaz d'échappement (26) selon l'une quelconque des revendications précédentes, dans lequel la densité de cellules de la région intérieure (34) est comprise dans une plage de 100 à 225 cpsi, en particulier dans une plage de 150 à 200 cpsi.

7. Composant de post-traitement de gaz d'échappement (26) selon l'une quelconque des revendications précédentes, comprenant en outre des moyens de réglage (38, 46) pour guider de manière sélective un flux de gaz d'échappement dans la région intérieure (34) et/ou dans la région extérieure (36) du composant de post-traitement de gaz d'échappement (26).

8. Installation de gaz d'échappement (10) pour un moteur à combustion interne, comprenant un composant de post-traitement de gaz d'échappement (26) selon l'une quelconque des revendications précédentes 1 à 7.

9. Installation de gaz d'échappement (10) selon la revendication 8, comprenant en outre un précatalyseur (16), en particulier un catalyseur à trois voies monté en amont du composant de post-traitement de gaz d'échappement (26) dans la direction d'écoulement du gaz d'échappement.

10. Installation de gaz d'échappement (10) selon la revendication 8 ou 9, comprenant en outre un catalyseur principal (52), en particulier un catalyseur à trois voies monté en aval du composant de post-traitement de gaz d'échappement (26) dans la direction d'écoulement de gaz d'échappement.

11. Véhicule comprenant un moteur à combustion interne et une installation de gaz d'échappement (10) selon l'une quelconque des revendications 8 à 10, raccordée à celui-ci.
